# EUROPÄISCHE PATENTANMELDUNG

(11) **EP 3 369 312 A1**
(43) Veröffentlichungstag der Anmeldung: **05.09.2018**
(21) Anmeldenummer: 18158198.4
(22) Anmeldetag: 22.02.2018
(51) Int. Cl.: A01K 9/00

(54) **TRÄNKEEIMER**

(30) Priorität: 01.03.2017 DE 102017104217
(71) Anmelder: Holm, Hans Joachim, 24784 Westerrönfeld (DE); Laue, Hans-Joachim, 24783 Osterrönfeld (DE)
(72) Erfinder: Holm, Hans Joachim, 24784 Westerrönfeld (DE); Laue, Hans-Joachim, 24783 Osterrönfeld (DE)
(74) Vertreter: Hauck Patentanwaltspartnerschaft mbB

(57) **Zusammenfassung**

Tränkeeimer zur Fütterung von Nutztieren mit einem flüssigen Nahrungsmittel mit
• einem Aufnahmeraum zur Aufnahme des flüssigen Nahrungsmittels,
• mindestens einem Saugnuckel, der mit dem Aufnahmeraum des Tränkeeimers verbunden ist, so dass ein Nutztier in dem Aufnahmeraum befindliches Nahrungsmittel jederzeit saufen kann, gekennzeichnet durch
• einen Aktivitätssensor zur Erfassung einer Saugaktivität,
• eine elektronische Steuerung und
• eine mit der elektronischen Steuerung verbundene Funk-Datenübertragungseinrichtung und/oder Anzeigeeinrichtung, wobei
die elektronische Steuerung mit dem Aktivitätssensor verbunden und dazu ausgebildet ist, Signale des Aktivitätssensors auszuwerten und Saugaktivitätsinformationen über die Funk-Datenübertragungseinrichtung zu übermitteln und/oder mit der Anzeigeeinrichtung anzuzeigen.

## Beschreibung

Die Erfindung betrifft einen Tränkeeimer zur Fütterung von Nutztieren mit einem flüssigen Nahrungsmittel. Solche Tränkeeimer werden in der Nutztierhaltung insbesondere zur Fütterung von Kälbern mit Vollmilch oder Milchaustauscher verwendet. Die Tränkeeimer weisen einen Saugnuckel auf, über den die Nutztiere jederzeit saufen können. Sie sind besonders einfach und flexibel einsetzbar. Insbesondere können sie in bedarfsgerechter Anzahl an oder in einer Kälberbox befestigt sowie sehr einfach befüllt und gereinigt werden.

Im Vergleich zu anderen aufwendigeren Formen der Fütterung, beispielsweise mit vollautomatischen Tränkeautomaten, bieten Tränkeeimer jedoch nach dem Befüllen keinerlei Kontrolle über die Nutzung des Futtermittels.

Davon ausgehend ist es die Aufgabe der Erfindung, einen Tränkeeimer zur Verfügung zu stellen, der mehr Kontrolle über die tatsächliche Nutzung des Futtermittels ermöglicht.

Diese Aufgabe wird gelöst durch den Tränkeeimer mit den Merkmalen des Anspruchs 1. Vorteilhafte Ausgestaltungen sind in den Unteransprüchen angegeben.

Der Tränkeeimer dient zur Fütterung von Nutztieren mit einem flüssigen Nahrungsmittel und hat
- einen Aufnahmeraum zur Aufnahme des flüssigen Nahrungsmittels,
- mindestens einen Saugnuckel, der mit dem Aufnahmeraum des Tränkeeimers verbunden ist, sodass ein Nutztier in dem Aufnahmeraum befindliches Nahrungsmittel jederzeit saufen kann,
- einen Aktivitätssensor zur Erfassung einer Saugaktivität,
- eine elektronische Steuerung und
- eine mit der elektronischen Steuerung verbundene Funk-Datenübertragungseinrichtung und/oder Anzeigeeinrichtung, wobei
- die elektronische Steuerung mit dem Aktivitätssensor verbunden und dazu ausgebildet ist, Signale des Aktivitätssensors auszuwerten und Saugaktivitätsinformationen über die Funk-Datenübertragungseinrichtung zu übermitteln und/oder mit der Anzeigeeinrichtung anzuzeigen.

Der Tränkeeimer kann einen Grundkörper mit der Form eines herkömmlichen Henkeleimers und einen Deckel aufweisen und mit einem einzigen Saugnuckel versehen sein. Möglich ist auch eine davon abweichende Form des Tränkeeimers, etwa in Gestalt eines kleinen Trogs. Insbesondere in diesem Fall kann es sinnvoll sein, den Tränkeeimer mit mehreren Saugnuckeln zu versehen, sodass mehrere Nutztiere zugleich saufen können. Ebenfalls möglich ist die Verwendung eines Tränkeeimers, der zylindrisch oder rechteckig ist und/oder die Form einer großen Trinkflasche aufweist. Dementsprechend kann das Volumen des Aufnahmeraums unterschiedlich ausfallen und zum Beispiel im Bereich von zwei Litern bis 80 Litern liegen. In vielen Fällen liegt das Volumen des Aufnahmeraums im Bereich von 5 Litern bis 20 Litern. Der Tränkeeimer kann eine Befestigungseinrichtung zur Befestigung an einem Gitter oder einer Wand einer Kälberbox aufweisen, beispielsweise in Form von Befestigungsöffnungen.

Der Tränkeeimer kann eine Wärmeisolation aufweisen, zum Beispiel in Form einer Schicht aus einem thermisch isolierenden Material, die eine den Aufnahmeraum begrenzende Schicht umgibt.

Bei der Erfindung werden mit Hilfe des Aktivitätssensors und der elektronischen Steuerung Informationen über eine Saugaktivität gewonnen und mit Hilfe der Funk-Datenübertragungseinrichtung übermittelt, insbesondere an eine zentrale Stelle wie ein Fütterungsmanagementsystem. Alternativ oder zusätzlich können die Saugaktivitätsinformationen mit einer Anzeigeeinrichtung des Tränkeeimers angezeigt werden. Dabei kann der Aktivitätssensor jeder Sensor sein, dessen Signale Rückschlüsse auf eine Saugaktivität eines Tiers an dem Tränkeeimer erlauben.

Dadurch ist es möglich, die Saugaktivitätsinformationen zu sammeln und auszuwerten. Insbesondere kann festgestellt werden, ob die mit dem Tränkeeimer versorgten Tiere das Nahrungsmittel in gewohnter Weise annehmen. Weitere relevante Erkenntnisse können bei einer Auswertung des zeitlichen Verlaufs der Saugaktivität gewonnen werden, insbesondere über das Trinkverhalten und/oder die Gesundheit der mit dem Tränkeeimer versorgten Nutztiere.

Der Tränkeeimer kann eine Anzeigeeinrichtung aufweisen, die mit der elektronischen Steuerung verbunden ist und die die Saugaktivitätsinformationen anzeigt. Bei der Anzeigeeinrichtung kann es sich im einfachsten Fall um eine einzige Leuchte handeln, insbesondere um eine LED. Die Anzeigeeinrichtung kann auch eine Klartextinformation und/oder grafische Symbole anzeigen. Mit Hilfe der Anzeigeeinrichtung kann beispielsweise eine Information über den Füllstand unmittelbar angezeigt werden. Ebenfalls möglich ist die Verwendung der Anzeigeeinrichtung als Warnsignal, insbesondere falls die von der elektronischen Steuerung ermittelten Saugaktivitätsinformationen auf ein von der Erwartung abweichendes Saugverhalten hindeuten. Es ist dann besonders vorteilhaft, wenn dieses Warnsignal unmittelbar an dem Tränkeeimer angezeigt wird, damit eine Person, die beispielsweise zum Befüllen des Tränkeeimers vorbeikommt, den Gesundheitszustand der Tiere besonders sorgfältig überprüfen kann.

In einer Ausgestaltung ist die elektronische Steuerung dazu ausgebildet, die Saugaktivitätsinformationen zu vorgegebenen Zeitpunkten, in vorgegebenen Zeitintervallen und/oder auf Abruf zu übermitteln und/oder anzuzeigen. Diese Maßnahmen tragen dazu bei, dass an der Anzeigeeinrichtung oder an einer zentralen Stelle, an die die Informationen übermittelt werden, stets aktuelle Daten verfügbar sind.

In einer Ausgestaltung weist der Tränkeeimer eine Batterie zur Energieversorgung der elektronischen Steuerung und zur Energieversorgung der Funk-Datenübertragungseinrichtung und/oder der Anzeigeeinrichtung auf. Dadurch kann der Tränkeeimer trotz seiner erweiterten Funktionalität als autarke Einheit betrieben werden. Insbesondere müssen keinerlei Kabel verlegt oder an den Tränkeeimer angeschlossen werden.

In einer Ausgestaltung ist der Aktivitätssensor ein Füllstandssensor zur Erfassung eines Füllstands des flüssigen Nahrungsmittels in dem Aufnahmeraum. In diesem Fall sind die erfassten Füllstände die Grundlage der Saugaktivitätsinformation. Im einfachsten Fall deutet eine beliebige Änderung des von dem Füllstandssensor erfassten Füllstands auf eine Saugaktivität hin und die übertragene und/oder angezeigte Saugaktivitätsinformation besteht im Wesentlichen aus der Information, dass eine Saugaktivität erfasst wurde. Es ist jedoch auch möglich, die erfassten Füllstandsinformationen selbst oder andere daraus abgeleitete Informationen als Saugaktivitätsinformation zu übertragen und/oder anzuzeigen.

In einer Ausgestaltung weist der Füllstandssensor einen Entfernungsmesser auf. Grundsätzlich kann der Füllstandssensor den Füllstand in dem Aufnahmeraum auf beliebige Art und Weise erfassen, beispielsweise mit Hilfe von einer oder mehreren Füllstandselektroden, durch Erfassen einer in dem Aufnahmeraum angeordneten Skala oder mit Hilfe eines Schwimmers. Bevorzugt erfolgt die Füllstandsmessung jedoch mit einem Entfernungsmesser, der den Abstand zu einem Flüssigkeitsspiegel des flüssigen Nahrungsmittels berührungslos erfassen kann. Zum Beispiel kann der Entfernungsmesser ein optischer oder ein akustischer Entfernungsmesser sein. Die Entfernung kann auf Grundlage einer Laufzeitmessung, nach dem Prinzip der Triangulation oder nach einem sonstigen Messprinzip erfolgen.

In einer Ausgestaltung ist der Aktivitätssensor ein Beschleunigungssensor. Mit dem Beschleunigungssensor können Beschleunigungen, insbesondere Erschütterungen, Bewegungen und/oder eine Lage des Tränkeeimers erfasst werden. Beispielsweise führt ein Trinkvorgang eines Kalbs an dem Saugnuckel typischerweise zu stoßförmigen Bewegungen des Saugnuckels bzw. des Tränkeeimers. Die auf Grundlage der Signale des Beschleunigungssensors gewonnenen Saugaktivitätsinformationen können im Wesentlichen aus der Information bestehen, dass ein Trinkvorgang erfasst wurde. Möglich ist jedoch auch eine differenziertere Auswertung der Signale, die beispielsweise die Angabe einer Frequenz des Saugvorgangs ermöglicht. Die entsprechenden Informationen können über die Funk-Datenübertragungseinrichtung übermittelt und/oder mit der Anzeigeeinrichtung angezeigt werden. Sie geben Aufschluss über die Aktivität und das Verhalten der Nutztiere. Die Erfassung der Lage des Tränkeeimers kann zudem darüber informieren, ob sich der Tränkeeimer in seiner vorgesehenen Anordnung befindet oder nicht, beispielsweise falls er umgestoßen wurde.

Es versteht sich, dass der Tränkeimer auch zwei oder drei der Aktivitätssensoren Füllstandssensor, Beschleunigungssensor und Kraftaufnehmer aufweisen kann. In diesem Fall können auf Grundlage der Vielzahl von Aktivitätssensoren mehrere unterschiedliche Typen von Saugaktivitätsinformationen übermittelt und/oder angezeigt und/oder komplexere Informationen zusammengestellt werden.

In einer Ausgestaltung ist der Aktivitätssensor ein Kraftaufnehmer. Beispielsweise kann ein Biegestab oder eine Wägezelle eingesetzt werden, um eine auf den Tränkeeimer einwirkende Kraft zu erfassen. Auf diese Weise können zum Beispiel durch die genannten Stoßbewegungen ausgeübte Kräfte erfasst und ausgewertet werden. Der Kraftaufnehmer kann hierzu zum Beispiel zwischen dem Tränkeeimer und einer Wandhalterung, an der der Tränkeeimer befestigt ist, angeordnet werden. Es ergeben sich ähnliche Auswertungsmöglichkeiten, wie vorstehend zu dem Beschleunigungsssensor erläutert. Ebenfalls möglich ist eine Anordnung des Kraftaufnehmers derart, dass er eine auf den Tränkeeimer einwirkende Gewichtskraft erfasst. In diesem Fall können aus den Signalen des Kraftaufnehmers Füllstandsinformationen abgeleitet und wie im Zusammenhang mit dem Füllstandssensor erläutert genutzt werden.

In einer Ausgestaltung umfasst der Tränkeeimer eine Aufhängung, an der der Tränkeeimer in einer Ruheposition federnd aufgehängt ist, und der Aktivitätssensor ist dazu ausgebildet, eine Auslenkung aus der Ruheposition zu erfassen. Die Aufhängung kann ein erstes Teil aufweisen, an dem der Tränkeeimer befestigt ist, beispielsweise durch Einhängen, und ein zweites Teil, das an einer Wand, beispielsweise einer Wand einer Kälberbox, befestigt ist, wobei das erste Teil gegen die Kraft einer Feder oder eines anderen, durch Gewicht, Druck oder Zug veränderbaren Elements relativ zu dem zweiten Teil verlagerbar ist. Die Auslenkung aus der Ruhelage kann durch die bei einem Saugvorgang ausgeübten Kräfte erfolgen, oder durch eine füllstandsbedingte Änderung der Gewichtskraft. Bei dieser Ausgestaltung kann als Aktivitätssensor beispielsweise ein Kraftaufnehmer oder ein Beschleunigungssensor eingesetzt werden. Alternativ kann die Auslenkung mit einem an einem Teil der Aufhängung angeordneten Magnetometer erfasst werden, der auf das Magnetfeld eines an einem anderen Teil der Aufhängung angeordneten Permanentmagneten reagiert. Dies ermöglicht insbesondere eine einfache, quantitative Messung der Auslenkung. Das Magnetometer kann beispielsweise einen integrierten Schaltkreis mit einem Hall-Sensor aufweisen.

Bei der Ausgestaltung mit einer Aufhängung oder bei Verwendung einer vorstehend erwähnten Wandhalterung können einige Elemente des Tränkeeimers, insbesondere der Aktivitätssensor, die elektronische Steuerung, die Funk-Datenübertragungseinrichtung, die Anzeigeeinrichtung, das nachfolgend erläuterte Bedienelement und/oder das nachfolgend erläuterte Elektronikmodul in der Aufhängung bzw. in der Wandhalterung angeordnet sein.

In einer Ausgestaltung weist der Tränkeeimer ein Bedienelement auf, das mit der elektronischen Steuerung verbunden ist, wobei die elektronische Steuerung dazu ausgebildet ist, bei Betätigung des Bedienelements einen Zustand der Anzeigeeinrichtung zu ändern und/oder eine Information über die Funk-Datenübertragungseinrichtung zu übermitteln. Bei dem Bedienelement kann es sich beispielsweise um einen Druck- oder Drehknopf oder um einen Taster handeln. Das Bedienelement kann beispielsweise dazu genutzt werden, ein zuvor angezeigtes Warnsignal zurückzusetzen. Darüber hinaus können auch sonstige Eingaben für die elektronische Steuerung vorgenommen werden, beispielsweise im Zusammenhang mit einer Kalibrierung des Füllstandssensors.

In einer Ausgestaltung ist die elektronische Steuerung dazu ausgebildet, anhand der Saugaktivitätsinformationen eine Trinkgeschwindigkeit zu ermitteln und mit der Funk-Datenübertragungseinrichtung zu übermitteln und/oder mit der Anzeigeeinrichtung anzuzeigen. Möglich ist dies zum Beispiel anhand der erläuterten Auswertung einer auf den Tränkeeimer einwirkenden Gewichtskraft, auf Grundlage der Beschleunigungsdaten, insbesondere mithilfe einer Saugfrequenz, oder mit einem Füllstandssensor. Bei entsprechend genauer Erfassung kann die Trinkgeschwindigkeit kontinuierlich oder gemittelt über kurze Zeitabstände berechnet werden. Falls der Tränkeeimer mit einem Beschleunigungssensor ausgestattet ist, wie vorstehend beschrieben, kann zusätzlich zu einer Füllstands- oder Gewichtsinformation anhand der Beschleunigungsdaten festgestellt werden, über welchen Zeitraum ein Nutztier an dem Saugnuckel saugt. Die diesem Trinkvorgang zugeordnete Trinkgeschwindigkeit kann dann durch Auswerten der Füllstände/Gewichte zu Beginn und zum Ende dieses Zeitraums berechnet werden. Auf diese Weise wird eine besonders genaue und für einen bestimmten Trinkvorgang aussagekräftige Information über die Trinkgeschwindigkeit gewonnen. Sie erlaubt wichtige Rückschlüsse über die Entwicklung und/oder den Gesundheitszustand des zugeordneten Nutztiers.

In einer Ausgestaltung weist der Tränkeeimer einen Deckel auf, in den die elektronische Steuerung und der Aktivitätssensor integriert sind und in den die Funk-Datenübertragungseinrichtung und/oder die Anzeigeeinrichtung integriert sind. Sofern der Tränkeeimer über eine Batterie oder ein Bedienelement verfügt, können diese ebenfalls in den Deckel integriert sein. Grundsätzlich können die genannten Elemente in beliebiger Anordnung an dem Tränkeeimer befestigt sein, sowohl innerhalb des Aufnahmeraums als auch an einer Außenseite des Tränkeeimers. Die Anordnung im Deckel ist besonders vorteilhaft, weil der Deckel besonders einfach als Einheit ausgetauscht werden kann. So kann sehr einfach der Deckel mit einem anderen Eimer verwendet werden, beispielsweise falls ein Saugnuckel verschlissen ist und der gesamte Eimer mit dem Saugnuckel bis auf den Deckel ausgetauscht werden soll. Der ausgetausche Tränkeeimer ist nach dem Aufsetzen des Deckels sofort wieder nutzbar. Ein weiterer Vorteil ist, dass die Erfassung des Füllstands mit einem im Deckel angeordneten Füllstandssensor besonders einfach ist. Dies gilt insbesondere in Verbindung mit einem Entfernungsmesser, dessen "Blickrichtung" dann vom Deckel senkrecht abwärts auf den Flüssigkeitsspiegel ausgerichtet werden kann. Ebenfalls möglich ist eine Integration der genannten Elemente in einen Boden eines Tränkeeimers. In diesem Fall kann eine Füllstandserfassung insbesondere mit einem Ultraschall- oder einem sonstigen akustischen Füllstandssensor bewerkstelligt werden, der vom Boden aus senkrecht nach oben in Richtung zu dem Flüssigkeitsspiegel gerichtet ist.

In einer Ausgestaltung bilden die elektronische Steuerung, der Aktivitätssensor und die Funk-Datenübertragungseinrichtung und/oder die Anzeigeeinrichtung ein flüssigkeitsdichtes Elektronikmodul. In dieses Modul können wahlweise weitere Elemente integriert sein, gegebenenfalls zum Beispiel die Batterie und das Bedienelement. Die Ausbildung als flüssigkeitsdichtes Elektronikmodul schützt die enthaltenen Elemente vor Beschädigung. Sie ermöglicht außerdem einen besonders einfachen Austausch, zum Beispiel bei Funktionsstörungen. Möglich ist auch, das Elektronikmodul als eigenständige Einheit zu fertigen, die mit einem herkömmlichen Tränkeeimer kombiniert werden kann. Hierzu kann das Elektronikmodul eine Befestigungseinrichtung zur Befestigung an einem Tränkeeimer aufweisen.

In einer Ausgestaltung ist mindestens einer der beschriebenen Tränkeeimer Teil eines Systems, das zusätzlich einen Wagen, der einen Vorratsbehälter für das flüssige Nahrungsmittel aufweist und zum Befüllen des mindestens einen Tränkeeimers eingerichtet ist, umfasst, wobei der Wagen eine elektronische Steuereinheit und eine Funk-Datenübertragungseinheit zur Kommunikation mit der Funk-Datenübertragungseinrichtung des mindestens einen Tränkeeimers aufweist. Der Wagen kann insbesondere ein fahrbarer Milchwagen sein, wie er in der europäischen Patentanmeldung EP 1 897 438 A1 der Anmelder beschrieben ist. Insbesondere kann der Wagen eine Abgabevorrichtung aufweisen, mit der eine vorgebbare Flüssigkeitsmenge direkt in den mindestens einen Tränkeeimer abgegeben werden kann. Bei der Erfindung ist der Wagen zur Kommunikation mit dem Tränkeeimer über Funk ausgerüstet. Dadurch sind die von dem Tränkeeimer erfassten Füllstands- oder sonstigen Informationen direkt am Wagen abrufbar, insbesondere während, vor oder nach einem Befüllvorgang. Ein besonderer Vorteil dieser Lösung ist, dass für die Funk-Datenübertragungseinrichtung des Tränkeeimers lediglich eine geringe Reichweite erforderlich ist, da der Wagen bzw. eine an dem Wagen angeordnete Empfangseinrichtung der in den Wagen integrierten Funk-Datenübertragungseinheit in geringem Abstand von dem Tränkeeimer platziert werden kann. Der Tränkeeimer weist dadurch einen geringen Stromverbrauch auf und kann mit einer einfachen Batterie über lange Zeiträume betrieben werden.

In einer Ausgestaltung ist die elektronische Steuerung dazu ausgebildet, von dem mindestens einen Tränkeeimer übermittelte Informationen zu speichern und/oder an ein zentrales Fütterungsmanagementsystem weiterzuleiten. Durch die Möglichkeit, die Informationen in dem Wagen zu speichern, können die Daten einer Vielzahl von Tränkeeimern während einer "Befüllrunde" eingesammelt und nachfolgend gebündelt ausgewertet werden. Die Übertragung an das zentrale Fütterungsmanagementsystem kann ebenfalls über die Funk-Datenübertragungseinheit erfolgen. Möglich ist auch die Verwendung einer zusätzlichen, gesonderten Funkeinrichtung oder der Einsatz eines Verbindungskabels, über das der Wagen mit dem Fütterungsmanagementsystem verbunden wird.

In einer Ausgestaltung weist der Wagen eine Anzeigeeinheit auf, wobei die elektronische Steuerung dazu ausgebildet ist, von dem mindestens einen Tränkeeimer übermittelte Informationen auf der Anzeigeeinheit anzuzeigen. Die Anzeigeeinheit kann beispielsweise ein Bildschirm, insbesondere ein Touchscreen, sein, der eine Anzeige unterschiedlicher Symbole oder von Klartextmitteilungen ermöglicht. Dadurch können die von dem Tränkeeimer übermittelten Informationen für einen Benutzer übersichtlich dargestellt werden.

Nachfolgend wird die Erfindung anhand von Figuren näher erläutert.
- Fig. 1: ist eine schematische Darstellung eines erfindungsgemäßen Tränkeeimers,
- Fig.2: ist eine schematische Darstellung eines anderen erfindungsgemäßen Tränkeeimers mit einer Aufhängung.

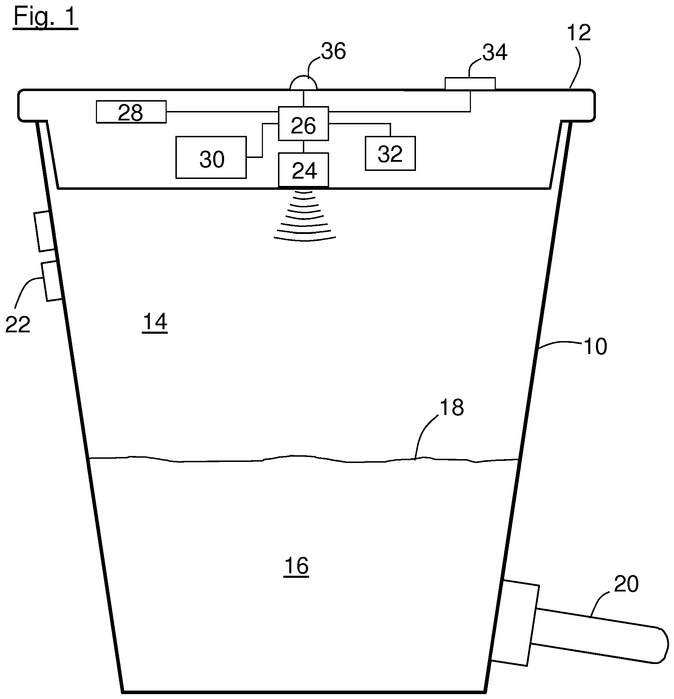

Der Tränkeeimer umfasst einen eimerförmigen Grundkörper 10, der von einem Deckel 12 verschlossen ist. Innerhalb des Grundkörpers 10 ist ein Aufnahmeraum 14 zur Aufnahme eines flüssigen Nahrungsmittels 16 angeordnet. Im Beispiel der Figur 1 ist der Aufnahmeraum 14 bis zu einem Flüssigkeitsspiegel 18 mit dem flüssigen Nahrungsmittel 16 gefüllt.

An einem unteren Ende des Grundkörpers 10 ist ein Saugnuckel 20 angeordnet, der unmittelbar mit dem Aufnahmeraum 14 verbunden ist, sodass ein Nutztier durch Saugen an dem Saugnuckel 20 jederzeit das flüssige Nahrungsmittel 16 aufnehmen kann. Am oberen Ende des Grundkörpers 10 und dem Saugnuckel 20 gegenüberliegend ist eine Befestigungseinrichtung 22 zur Befestigung des Tränkeeimers an einer Kälberbox angeordnet.

Der Deckel 12 hat eine scheibenförmige Grundform und ist flüssigkeitsdicht gekapselt. Er enthält als Beispiel eines Aktivitätssensors einen Füllstandssensor 24. Im Beispiel handelt es sich um einen optischen Entfernungsmesser, dessen "Blickrichtung" senkrecht nach unten auf den Flüssigkeitsspiegel 18 ausgerichtet ist.

Der Füllstandssensor 24 ist mit einer elektronischen Steuerung 26 verbunden. Die elektronische Steuerung 26 ist außerdem mit einer Funk-Datenübertragungseinrichtung 28 verbunden. Weiterhin ist mit der elektronischen Steuerung 26 ein Beschleunigungssensor 32 als weiteres Beispiel eines Aktivitätssensors verbunden. Die Funk-Datenübertragungseinrichtung 28 und die elektronische Steuerung 26 werden aus einer Batterie 30 mit elektrischer Energie versorgt.

Die elektronische Steuerung 26 wertet die Signale des Füllstandssensors 24 und des Beschleunigungssensors 32 aus und übermittelt Informationen über den Füllstand in dem Aufnahmeraum 16, insbesondere eine Trinkgeschwindigkeit, mit Hilfe der Funk-Datenübertragungseinrichtung 28 an ein nicht gezeigtes, zentrales Fütterungsmanagementsystem.

Schließlich weist der Tränkeeimer eine Anzeigeeinrichtung 36 in Form einer LED auf, die an einer Oberseite des Deckels 12 angeordnet ist. Sie ist mit der elektronischen Steuerung 26 verbunden und dient zur Anzeigeeinrichtung eines Warnsignals. Der ebenfalls an der Oberseite des Deckels 12 angeordnete Taster ist ein Bedienelement 34, das mit der elektronischen Steuerung 26 verbunden ist. Im Beispiel dient es zum Zurücksetzen eines Warnsignals.

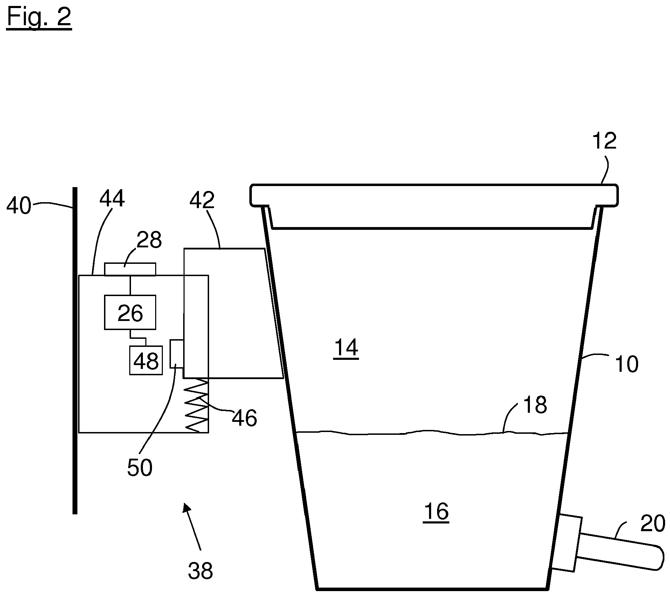

Das Ausführungsbeispiel der Fig. 2 zeigt einen Tränkeeimer, der mit einer Aufhängung 38 an einer Wand 40 einer Kälberbox federnd aufgehängt ist. Die Aufhängung umfasst ein erstes Teil 42, an dem der Tränkeeimer befestigt ist, und ein zweites Teil 44, das an der Wand 40 befestigt ist. Das erste Teil 42 ist gegen die Kraft einer Feder 46 relativ zu dem zweiten Teil 44 in vertikaler Richtung verlagerbar. Dies geschieht in Abhängigkeit vom Gesamtgewicht des Tränkeeimers, also insbesondere abhängig vom Füllstand.

Zur Erfassung der Auslenkung des zweiten Teils 44 relativ zu dem ersten Teil 42 aus einer Ruhelage dient ein Aktivitätssensor in Form eines Magnetometers 48. Das Magnetometer 48 ist im gezeigten Beispiel am zweiten Teil 44 befestigt und wirkt mit einem am ersten Teil 42 befestigten Permanentmagneten 50 zusammen. Wie im Ausführungsbeispiel der Fig. 1 ist der Aktivitätssensor mit einer elektronischen Steuerung 26 verbunden, die ihrerseits mit einer Funk-Datenübertragungseinrichtung 28 verbunden ist. Diese Elemente sind in der Aufhängung 38 angeordnet und unterscheiden sich hinsichtlich ihrer Funktion nicht vom Ausführungsbeispiel der Fig. 1.

### Liste der verwendeten Bezugszeichen:

- 12: 10 Grundkörper Deckel
- 14: Aufnahmeraum
- 16: flüssiges Nahrungsmittel
- 18: Flüssigkeitsspiegel
- 20: Saugnuckel
- 22: Befestigungseinrichtung
- 24: Füllstandssensor
- 26: elektronische Steuerung
- 28: Funk-Datenübertragungseinrichtung
- 30: Batterie
- 32: Beschleunigungssensor
- 34: Bedienelement
- 36: Anzeigeeinrichtung
- 38: Aufhängung
- 40: Wand
- 42: erstes Teil
- 44: zweites Teil
- 46: Feder
- 48: Magnetometer
- 50: Permanentmagnet

## Patentansprüche

1. Tränkeeimer zur Fütterung von Nutztieren mit einem flüssigen Nahrungsmittel (16) mit
• einem Aufnahmeraum (14) zur Aufnahme des flüssigen Nahrungsmittels (16),
• mindestens einem Saugnuckel (20), der mit dem Aufnahmeraum (14) des Tränkeeimers verbunden ist, so dass ein Nutztier in dem Aufnahmeraum (14) befindliches Nahrungsmittel (16) jederzeit saufen kann, **gekennzeichnet durch**
• einen Aktivitätssensor zur Erfassung einer Saugaktivität,
• eine elektronische Steuerung (26) und
• eine mit der elektronischen Steuerung (26) verbundene Funk-Datenübertragungseinrichtung (28) und/oder Anzeigeeinrichtung (36), wobei
• die elektronische Steuerung (26) mit dem Aktivitätssensor verbunden und dazu ausgebildet ist, Signale des Aktivitätssensors auszuwerten und Saugaktivitätsinformationen über die Funk-Datenübertragungseinrichtung (28) zu übermitteln und/oder mit der Anzeigeeinrichtung (36) anzuzeigen.

2. Tränkeeimer nach Anspruch 1, **dadurch gekennzeichnet, dass** die elektronische Steuerung (26) dazu ausgebildet ist, die Saugaktivitätsinformationen zu vorgegebenen Zeitpunkten, in vorgegebenen Zeitintervallen und/oder auf Abruf zu übermitteln und/oder anzuzeigen.

3. Tränkeeimer nach Anspruch 1 oder 2, **dadurch gekennzeichnet, dass** der Tränkeeimer eine Batterie (30) zur Energieversorgung der elektronischen Steuerung (26) und zur Energieversorgung der Funk-Datenübertragungseinrichtung (28) und/oder der Anzeigeeinrichtung (36) aufweist.

4. Tränkeeimer nach einem der Ansprüche 1 bis 3, **dadurch gekennzeichnet, dass** der Aktivitätssensor ein Füllstandssensor (24) zur Erfassung eines Füllstands des flüssigen Nahrungsmittels (16) in dem Aufnahmeraum (14) ist.

5. Tränkeeimer nach Anspruch 4, **dadurch gekennzeichnet, dass** der Füllstandssensor (24) einen Entfernungsmesser aufweist.

6. Tränkeeimer nach einem der Ansprüche 1 bis 3, **dadurch gekennzeichnet, dass** der Aktivitätssensor ein Beschleunigungssensor (32) ist.

7. Tränkeeimer nach einem der Ansprüche 1 bis 3, **dadurch gekennzeichnet, dass** der Aktivitätssensor ein Kraftaufnehmer ist.

8. Tränkeeimer nach einem der Ansprüche 1 bis 8, **gekennzeichnet durch** eine Aufhängung, an der der Tränkeeimer in einer Ruheposition federnd aufgehängt ist, wobei der Aktivitätssensor dazu ausgebildet ist, eine Auslenkung aus der Ruheposition zu erfassen.

9. Tränkeeimer nach einem der Ansprüche 1 bis 8, **dadurch gekennzeichnet, dass** der Tränkeeimer ein Bedienelement (34) aufweist, das mit der elektronischen Steuerung (26) verbunden ist, wobei die elektronische Steuerung (26) dazu ausgebildet ist, bei Betätigung des Bedienelements (34) einen Zustand der Anzeigeeinrichtung (36) zu ändern und/oder eine Information über die Funk-Datenübertragungseinrichtung (28) zu übermitteln.

10. Tränkeeimer nach einem der Ansprüche 1 bis 9, **dadurch gekennzeichnet, dass** die elektronische Steuerung (26) dazu ausgebildet ist, anhand der Saugaktivitätsinformationen eine Trinkgeschwindigkeit zu ermitteln und mit der Funk-Datenübertragungseinrichtung (28) zu übermitteln und/oder mit der Anzeigeeinrichtung (36) anzuzeigen.

11. Tränkeeimer nach einem der Ansprüche 1 bis 10, **dadurch gekennzeichnet, dass** der Tränkeeimer einen Deckel (12) aufweist, in den die elektronische Steuerung (26) und der Aktivitätssensor integriert sind und in den die Funk-Datenübertragungseinrichtung (28) und/oder die Anzeigeeinrichtung (36) integriert sind.

12. Tränkeeimer nach einem der Ansprüche 1 bis 11, **dadurch gekennzeichnet, dass** die elektronische Steuerung (26), der Aktivitätssensor (24) und die Funk-Datenübertragungseinrichtung (28) und/oder die Anzeigeeinrichtung (36) ein flüssigkeitsdichtes Elektronikmodul bilden.

13. System mit mindestens einem Tränkeeimer nach einem der Ansprüche 1 bis 12, **gekennzeichnet durch** einen Wagen, der einen Vorratsbehälter für das flüssige Nahrungsmittel (16) aufweist und zum Befüllen des mindestens einen Tränkeeimers eingerichtet ist, wobei der Wagen eine elektronische Steuereinheit (26) und eine Funk-Datenübertragungseinheit zur Kommunikation mit der Funk-Datenübertragungseinrichtung (28) des mindestens einen Tränkeeimers aufweist.

14. System nach Anspruch 13, **dadurch gekennzeichnet, dass** die elektronische Steuereinheit (26) dazu ausgebildet ist, von dem mindestens einen Tränkeeimer übermittelte Informationen zu speichern und/oder an ein zentrales Fütterungsmanagementsystem weiterzuleiten.

15. System nach Anspruch 13 oder 14, **dadurch gekennzeichnet, dass** der Wagen eine Anzeigeeinheit aufweist, wobei die elektronische Steuereinheit (26) dazu ausgebildet ist, von dem mindestens einen Tränkeeimer übermittelte Informationen auf der Anzeigeeinheit anzuzeigen.
